# EUROPÄISCHE PATENTANMELDUNG

(11) **EP 1 818 477 A2**
(43) Veröffentlichungstag der Anmeldung: **15.08.2007**
(21) Anmeldenummer: 07001683.7
(22) Anmeldetag: 26.01.2007
(51) Int. Cl.: E04F 13/08, F16B 13/00

(54) **Befestigungssystem für Bauteile an einem tragenden Untergrund sowie Verfahren und Montagehilfe zur Anbringung des Befestigungssystems**

(30) Priorität: 10.02.2006 DE 102006006164
(71) Anmelder: RANIT-Befestigungssysteme GmbH, 45701 Herten (DE)
(72) Erfinder: Gräwe, Bernd, 45701 Herten (DE)
(74) Vertreter: Grosse, Wolf-Dietrich Rüdiger

(57) **Zusammenfassung**

Bei einem Befestigungssystem (1) für Bauteile an einen tragenden Untergrund, bestehend aus einem Hülsenteil (4) mit einem daran einstückig ausgebildeten Halteteller (11) samt Haltetellerschaft (12), einem mit einschließlich seinem Kopf (6) in eine Durchgangsbohrung (13) des Hülsenteils (4) einführbares, in dem tragenden Untergrund verankerbares Befestigungselement (2) und einem die Durchgangsbohrung nach außen hin verschließenden, eine Einschraub-Werkzeugaufnahme (9) besitzenden Stopfen (3), ist der Stopfen (3) einstückig mit dem Befestigungselement (2) ausgebildet und zur Übertragung des Drehmoments eines Einschraubwerkzeugs auf den Halteteller (11) formschlüssig mit dem Hülsenteil (4) verbunden. Bei einem Verfahren zur Anbringung eines solchen Befestigungssystems (1) wird auf das formschlüssig zusammengefügte Befestigungssystem nach dem Einsetzen in die Bohrung des tragenden Untergrundes ein Tiefenanschlagmittel mit einem in die Einschraub-Werkzeugaufnahme des Stopfens (9) eingreifenden Schraubantrieb aufgesetzt und mit dem Eintreiben des Befestigungsmittels in die Bohrung durch die Rotation des Haltetellers (11) gleichzeitig das Befestigungssystem im Isoliermaterial bis zu einer von dem Tiefenanschlagmittel genau begrenzten Tiefe versenkt. Das Tiefenanschlagmittel weist hierzu eine Grundplat- ' te, eine Distanzhülse und eine obere Anschlagplatte sowie Antriebsverbindungsstücke auf.

## Beschreibung

Die Erfindung betrifft ein Befestigungssystem für Bauteile an einen tragenden Untergrund, bestehend aus einem Hülsenteil mit einem daran einstückig ausgebildeten Halteteller samt Haltetellerschaft, einem mit einschließlich seinem Kopf in eine Durchgangsbohrung des Hülsenteils einführbares, in dem tragenden Untergrund verankerbares Befestigungselement und einem die Durchgangsbohrung nach außen hin verschließenden, eine Einschraub-Werkzeugaufnahme besitzenden Stopfen. Weiterhin betrifft die Erfindung ein Verfahren sowie eine Montagehilfe zur Anbringung eines solchen Befestigungssystems für Bauteile aus Isoliermaterial an einen tragenden Untergrund.

Bei dem Befestigungselement handelt es sich vorrangig um eine Schraube. Unter dem Begriff tragender Untergrund wird neben Fassadenwänden auch jede Art von Unterkonstruktionen verstanden, auf die die Bauteile, insbesondere Leichtbauteile, wie Schaumstoffkörper und wärme- bzw. schallisolierende Materialien in Form von Platten, Panelen, Leisten etc. montiert werden.

Derartige Befestigungssysteme finden insbesondere Verwendung zur Montage von Wärmedämm-Verbundsystemen auf Putzbasis zur Isolation. Hierbei wird üblicherweise eine Isolierschicht, beispielsweise aus Polystyrolplatten oder aus hochverdichteten Steinwolleplatten, auf das Mauerwerk geklebt, verdübelt sowie anschließend verputzt.

Ein Befestigungssystem der eingangs genannten Art ist aus der EP 1 591 602 A1 bekannt. In dem Hülsenteil ist am unteren Ende eine zur Außenkontur des Kopfes des Befestigungselementes komplementäre Ausnehmung ausgebildet. Zum Montieren des Befestigungssystems wird dieses mit einer Schraube, nagelbar oder einschraubbar, vorgefertigt, die von dem eingeschraubten Gewindestopfen mit seinem Kopf in der mehrkantigen Ausnehmung der Endposition gehalten wird. Zum Einschrauben des Befestigungsmittels, entweder direkt in die Bohrung, wie zur Befestigung bei einem Untergrund aus Holz, oder unter Zwischenschaltung eines Dübels in eine Bohrung eines Mauerwerks, wird die über den eingeschraubten Gewindestopfen eingeleitete Einschraubbewegung auf das gesamte Hülsenteil und damit das Befestigungsmittel übertragen. Das notwendige Drehmoment wird über den Stopfen und das Durchrutschmoment weiter erhöhenden Rastmitteln übertragen. Vor allem dann allerdings, wenn der Halteteller des Hülsenteils in den tragenden Untergrund versenkt montiert werden soll, wird ein sehr hohes Drehmoment benötigt, und insbesondere bei der versenkten Montage in Mineralwollplatten lässt sich nicht vermeiden, daß durch das auftretende höhere Drehmoment der Halteteller um den Schraubenkopf dreht oder der Gewindestopfen trotz der das Durchrutschmoment erhöhenden Rastelemente durchdreht.

Bei einem Befestigungssystem ohne einen Verschlussstopfen ist es aus der DE 198 01 548 C1 bekannt, eine Schraube mit einem Kunststoffkopf durch Umspritzen zu versehen. Dieser mit einem Kunststoffmantel gebildete Kopf weist mehrere schmale, radial angeordnete Kunststofflippen auf, die den Abstand zwischen dem Kopf und der Innenwand der Ausnehmung einer einstückig mit einer Dübelhülse aus Kunststoff gespritzten Druckplatte abdichten sollen. Die Übertragung hoher Drehmomente ist hiermit nicht möglich.

Für eine andere Art eines Befestigungssystems ist durch die EP 0 644 301 B1 ein Dämmstoffhalter bekannt geworden, der einen Halteteller mit einem verdickten Abschnitt aufweist, über den der Dämmstoffhalter mit einer Schraube entweder durch Umspritzen oder durch Eindrehen der Schraube in eine verengte Sacklochbohrung verbunden ist. Zum Einschrauben in den Untergrund, z.B. Bohrloch eines Mauerwerks, besitzt der Halteteller in dem verdickten Abschnitt eine Werkzeug-aufnahme, die den Bohrer zum Herstellen des Bohrloches aufnehmen kann, so daß sich der Dämmstoffhalter maschinell mit der Bohrmaschine befestigen lässt.

Der Erfindung liegt die Aufgabe zugrunde, ein gattungsgemäßes Befestigungssystem sowie ein Verfahren und eine Montagehilfe zu dessen Anbringung an den tragenden Untergrund zu schaffen, die eine sichere Montage der einheitlich vorgefertigten Baueinheiten ermöglichen, insbesondere die Übertragung hoher Drehmomente und die versenkte Montage bei jeder Art von Isoliermaterial in einfacher Weise gewährleisten.

Diese Aufgabe wird für ein Befestigungssystem erfindungsgemäß dadurch gelöst, daß der Stopfen einstückig mit dem Befestigungselement ausgebildet und zur Übertragung des Drehmoments eines Einschraubwerkzeugs auf den Halteteller formschlüssig mit dem Hülsenteil verbunden ist. Der mit dem Befestigungselement einheitliche Stopfen braucht somit nur in das Hülsenteil eingesetzt zu werden, um durch die formschlüssige Verbindung beim Einschrauben des Befestigungsmittels auch hohe Drehmomente ohne Gefahr des Durchrutschens auf das Hülsenteil und damit den Halterteller übertragen zu können.

Eine bevorzugte Ausführung der Erfindung sieht zur formschlüssigen Verbindung vor, daß der Stopfen eine mehrkantige Außenkontur besitzt, mit der er in eine gleichermaßen mehrkantige Innenkontur des Hülsenteils eingreift. Die Mehrkantkontur kann ein Vier- oder Sechskant, alternativ ein Oval sein.

Wenn nach einem Vorschlag der Erfindung der Stopfen und die ihn aufnehmende Durchgangsbohrung des Hülsenteils von oben nach unten konisch verlaufend ausgebildet sind, lässt sich die Drehmomentübertragung weiter begünstigen, weil zusätzlich zu dem Formschluß eine Art kraftschlüssige Verbindung vorliegt.

Bei einer bevorzugten Ausführung der Erfindung ist der Halteteller gewölbt und tellerunterseitig scharfkantig ausgebildet. Der scharfkantige, schneidenartige Tellerunterrand am Außenumfang des Haltetellers trägt zu einer problemlosen, versenkten Montage auch bei festerem bzw. dichterem Isoliermaterial bei, wie Mineralwoll-Dämmstoff. Denn durch die Drehbewegung sowie den scharfkantigen unteren Rand des Haltetellers schneidet sich der Halteteller in das Isoliermaterial ein, ohne daß der Halteteller zusätzliche Schneiden oder ähnliches am äußeren Rand aufweisen muß. Gleichzeitig mit dem Einschneiden wird das Isoliermaterial unter dem Halteteller verdichtet. Es ist somit kein besonderes Montagewerkzeug mehr erforderlich.

Die Einstückigkeit von Befestigungselement und Stopfen lässt sich vorteilhaft durch Umspritzen des Kopfes des Befestigungselementes mit Kunststoff erreichen. Die Kunststoffumspritzung zu dem Stopfen wird hierbei inniger, wenn vorteilhaft der Kopf und ein Längenabschnitt eines Schaftteils des Befestigungselementes von dem Stopfen fest umschlossen sind.

Ein weiterer Vorschlag der Erfindung sieht vor, daß der Innendurchmesser der Durchgangsbohrung unterhalb des Sitzes des Stopfens im Haltetellerschaft kleiner ist als der Außendurchmesser des Schaftteils des Befestigungselementes. Hierdurch lässt sich ein Presssitz im Übergangsbereich vom Stopfen zum Befestigungselement mit einer Abdichtung gegen Feuchtigkeit und somit eine verbesserte Isolierwirkung erreichen.

Das erfindungsgemäße Verfahren zur Anbringung eines solchen Befestigungssystems für Bauteile aus Isoliermaterial sieht vor, daß auf das formschlüssig zusammengefügte Befestigungssystem nach dem Einsetzen in die Bohrung des tragenden Untergrundes ein Tiefenanschlagmittel mit einem in die Einschraub-Werkzeugaufnahme des Stopfens eingreifenden Schraubantrieb aufgesetzt wird und mit dem Eintreiben des Befestigungsmittels in die Bohrung durch die Rotation des Haltetellers gleichzeitig das Befestigungssystem im Isoliermaterial bis zu einer von dem Tiefenanschlagmittel genau begrenzten Tiefe versenkt wird. Damit kann in einem einzigen, ununterbrochenen Arbeitsgang das Befestigungssystem mit definierter Versenkung in der Isolierung montiert werden. Die Tiefenanschlagbegrenzung stellt sicher, daß der Halteteller bzw. das Hülsenteil nur so weit versenkt wird, daß eine anschließend eingesetzte Verschlussscheibe aus Isoliermaterial bündig mit dem befestigten Bauteil abschließt, so daß sich dann ein übergangsloser Außenputz aufbringen lässt.

Die der Erfindung zugrunde liegende Aufgabe wird für eine Montagehilfe bei der Anbringung eines solchen Befestigungssystems erfindungsgemäß durch ein Tiefenanschlagmittel gelöst, das aus einer unteren Grundplatte mit einem dem Durchmesser des Haltetellers angepassten Außendurchmesser, einer Distanzhülse und einer oberen Anschlagplatte sowie einem zentrisch durch diese Bauteile hindurchgeführten Schraubantrieb besteht, wobei der Schraubantrieb ein Anschlußende zur Verbindung mit der Einschraub-Werkzeugaufnahme des Stopfens und ein Anschlußende zur Verbindung mit einem Einschraubwerkzeug aufweist. Je nach vorwählbarem Abmaß der zwischen den beiden Platten eingeschlossenen Distanzhülse lässt sich die Tiefe der Versenkung exakt festlegen. Denn sobald sich die Anschlagplatte an das Bauteil angelegt hat, ist ein weiteres Eintreiben bzw. -schrauben des Befestigungsmittels nicht mehr möglich. Die an den Durchmesser des Haltetellers angepasste untere Grundplatte verhindert einerseits, daß durch die Rotation des Haltetellers ausgeschnittenes bzw. herausgelöstes Isoliermaterial nach außen in den umgebenden Raum gelangen kann. Andererseits sorgt sie für eine satte Anlage des Haltetellers an das Bauteil im Grund des Senkloches und schließt aus, daß sich der Halteteller aufwölben kann.

Weitere Einzelheiten und Merkmale der Erfindung ergeben sich aus den Ansprüchen und der nachfolgenden Beschreibung von in den Zeichnungen dargestellten Ausführungsbeispielen der Erfindung. Es zeigen:
- Fig. 1: als Einzelheit eine Ansicht eines einstückig mit einem Stopfen hergestellten Befestigungsmittels;
- Fig. 2: als Einzelheit eines Befestigungssystems in einem Längsschnitt ein Hülsenteil mit Halteteller und Haltetellerschaft;
- Fig. 3: das Hülsenteil der Fig. 2 in der Draufsicht;
- Fig. 4: in einem Teillängsschnitt eine Gesamtansicht einer vorgefertigten Einheit des die Bauteile der Fig. 1 bis 3 aufweisenden Befestigungssystems zusätzlich mit einem Dübel zur Wandverankerung;
- Fig. 5: ein innerhalb eines Wärmedämm-Verbundsystems in einer Wandbohrung montiertes Befestigungssystem nach Fig. 4;
- Fig. 6: ein innerhalb eines Wärmedämm-Verbundsystems auf einer Holzkonstruktion montiertes Befestigungssystem nach Fig. 4, demgegenüber ohne Dübel; und
- Fig. 7: in einer schematischen Gesamtansicht eine Montagehilfe zur Anbringung des Befestigungssystems nach Fig. 4 oder Fig. 5.

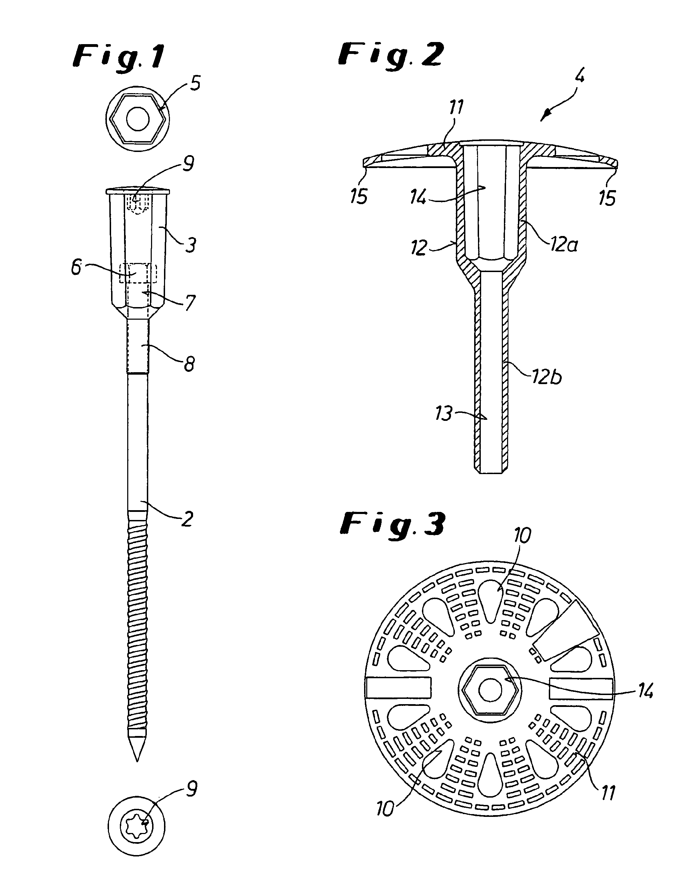

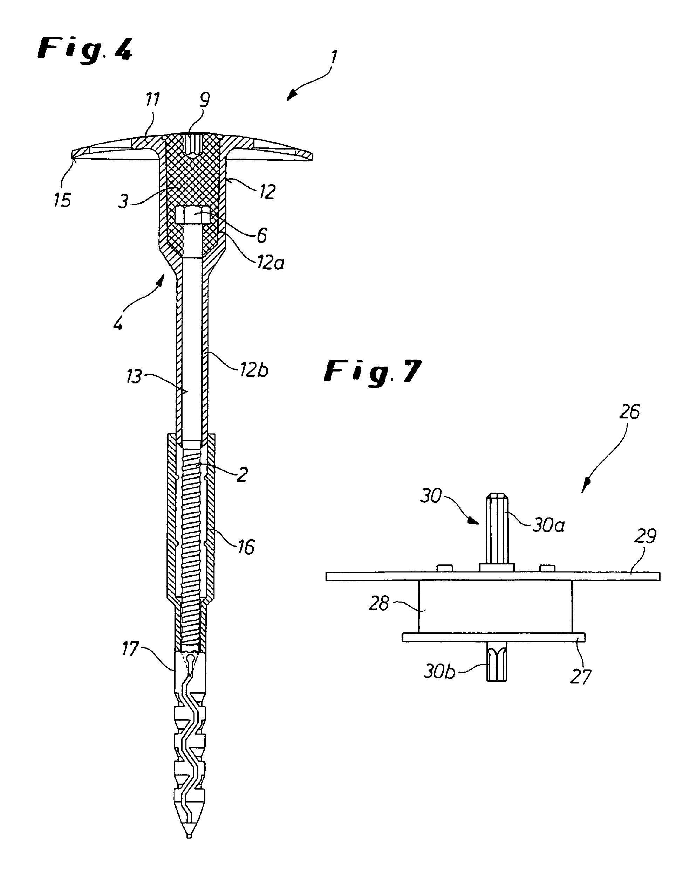

Als Einzelheit eines Befestigungssystems 1 (vgl. Fig. 4) sind in den Fig. 1 und 2 ein Befestigungselement in Form einer Schraube 2 und damit einstückigem Stopfen 3 bzw. ein Hülsenteil 4 dargestellt. Der Stopfen 3 besitzt eine mehrkantige, hier als Sechskant vorhandene Außenkontur 5 (vgl. in Fig. 1 die Einzelheit oberhalb des Stopfens) und ist durch Umspritzen mit Kunststoff an einem mehrkantigen Kopf 6 der Schraube 2 hergestellt. Von dem Kunststoff des Stopfens 3 ist au-βerdem ein Längenabschnitt 7 eines Schaftteils 8 der Schraube 2 umschlossen. An seinem oberen Ende ist der Stopfen 3 mit einer mehrkantigen Einschraub-Werkzeugaufnahme 9 (vgl. auch die Einzeldarstellung unterhalb des Schraubgewindes der Schraube 2) versehen.

Das Hülsenteil 4 besitzt einen nach außen bzw. oben leicht gewölbten, mit die flächige Anlage begünstigenden Einschnitten bzw. Durchbrüchen 10 (vgl. Fig. 3) vorgesehenen Halteteller 11 und sich daran nach unten anschließendem Haltetellerschaft 12, der einen im Durchmesser großen Stopfenaufnahmeabschnitt 12a aufweist, der in einen demgegenüber im Außendurchmesser sehr viel kleineren Endschaft 12b übergeht. Durch das gesamte Hülsenteil 4 verläuft eine Durchgangsbohrung 13, die im Bereich des Stopfen-Aufnahmeabschnitts 12a mit einer zu der mehrkantigen Außenkontur 5 des Stopfens 3 komplementären, mehrkantigen Innenkontur 14 ausgebildet ist. Der Innendurchmesser der Durchgangsbohrung 13 im Endschaft 12b des Haltetellerschaftes 12 und somit unterhalb des Sitzes für den Stopfen 3 in der Innenkontur 14 des Stopfen-Aufnahmeabschnitts 12a ist kleiner als der Außendurchmesser des Schaftteils 8 der Schraube 2. Hierdurch ergibt sich eine zusätzliche innige Verbindung zwischen der Schraube 2 und dem Hülsenteil 4, wenn die mit dem Stopfen 3 einstückige Schraube 2 in die Durchgangsbohrung 13 des Hülsenteils 4 eingesteckt worden ist. Der Halteteller 11 ist an seinem äußeren Tellerunterrand 15 scharfkantig ausgebildet.

Das zum Einsatz als komplette Baueinheit vollständig vorgefertigte Befestigungssystem 1 ist in Fig. 4 dargestellt und taucht mit dem Endschaft 12b des Hülsenteils 4 in einen Schaft 16 eines Dübels 17 ein, so daß das Hülsenteil 4 im Dübelschaft 16 verschiebbar bzw. teleskopierbar ist, was eine einfache Anpassung an unterschiedliche zu befestigende Materialien oder Unterkonstruktionen ermöglicht. Die mit dem sechskantigen Stopfen 3 in die mehrkantige Innenkontur 14 eingesetzte Schraube 2 ist formschlüssig und gegebenenfalls zusätzlich kraftschlüssig mit dem Hülsenteil 4 verbunden. Wenn zur Montage des Befestigungssystems 1 in die Einschraub-Werkzeugaufnahme 9 ein geeignetes Werkzeug, z.B. eine Bohrmaschine mit einem entsprechenden Adapter, in Eingriff gebracht und betätigt wird, dreht sich das gesamte Hülsenteil 4 mit der Schraube 2 um die Längsachse, spreizt dabei den Dübel 17 im Bohrloch des tragenden Untergrunds auf, wobei gleichzeitig der scharfkantige Tellerunterrand 15 den Freiraum zur Versenkung des Haltetellers in dem Isoliermaterial schafft. Das Drehmoment kann unbeeinträchtigt von den jeweiligen Eigenschaften des Isoliermaterials übertragen werden, ohne durchzürutschen.

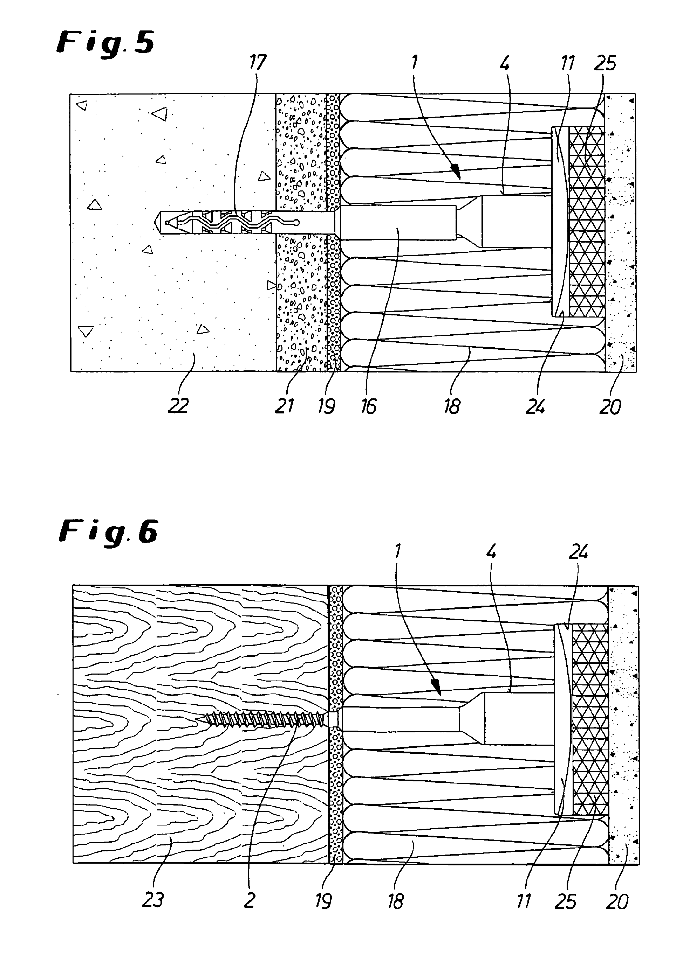

In den Fig. 5 und 6 sind Beispiele für das als komplett vorgefertigte Einheit zum Einsatz kommende Befestigungssystem 1 nach Fig. 4 innerhalb eines Wärmedämm-Verbundsystems dargestellt. Ein Isoliermaterial 18, eingeschlossen von einer Kleberschicht 19 und einem Außenputz 20, wird gemäß Fig. 5 an einer au-βerdem noch mit einer Putzschicht 21 versehenen tragenden Wand 22 in Form eines Mauerwerks und nach Fig. 6 an einer der Kleberschicht 19 unmittelbar folgenden Holzplatte 23 befestigt. Abweichend von Fig. 5, wo die Schraube des Befestigungssystems 1 über den Dübel 17 in dem Mauerwerk 22 verankert ist, wird gemäß Fig. 6 die als Holzschraube ausgeführte Schraube 2 direkt in die Holzplatte 23 eingeschraubt. Hierbei wurden - vor dem Auftragen des Außenputzes 20 - die Befestigungssysteme 1 in vorgebohrte Löcher gesteckt und durch Einschrauben mittels eines in die Einschraub-Werkzeugaufnahme 9 des Stopfens 3 im Halteteller 11 des Hülsenteils 4 eingesteckten Werkzeugs in ihre in den Fig. 5 und 6 gezeigte, teleskopierte und versenkte Endposition geschraubt.

Aufgrund des vorbehaltlos in den Halteteller 11 übertragenen Drehmomentes des Einschraubwerkzeugs hat der scharfkantige Tellerrand 15 das Versenkungsloch 24 hergestellt, an dessen Grund sich der Halteteller 11 mit seiner Unterseitige flächig anlegt. Eine in das Versenkungsloch 24 eingelegte Verschlussscheibe 25 schließt bündig mit dem Isoliermaterial 18 ab, so daß sich der Außenputz 20 übergangslos darauf aufbringen lässt.

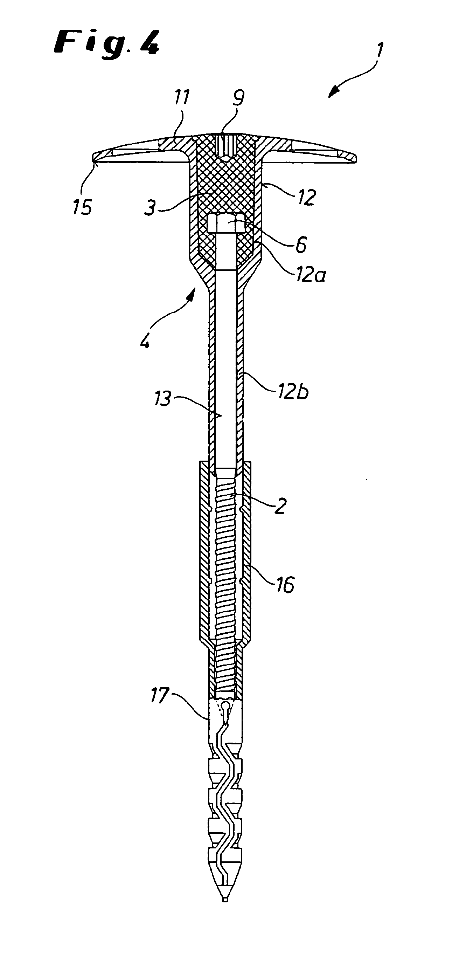

Damit sich für das Versenkungsloch 24 eine exakt vorbestimmbare Tiefe erreichen lässt, wird als Montagehilfe ein in Fig. 7 dargestelltes Tiefenanschlagmittel 26 verwendet. Es besteht aus einer unteren Grundplatte 27 mit einem dem Durchmesser des Haltetellers 11 angepaßten Außendurchmesser, einer das Tiefenmaß festlegenden Distanzhülse 28 und einer oberen Anschlagplatte 29. Durch diese Bauteile ist zentrisch ein Schraubantrieb 30 hindurchgeführt, z.B. eine Mehrkantwelle, die oberhalb der Anschlagplatte 29 ein Anschlußende 30a zur Verbindung mit einem Einschraubwerkzeug und unterhalb der Grundplatte 27 ein Anschlußende 30b zur Verbindung mit der Einschraub-Werkzeugaufnahme 9 des Stopfens 3 aufweist. Sobald die Anschlagplatte 29 auf das Isoliermaterial 18 auftrifft, wird ein weiteres Eintreiben des Befestigungssystems 1 und damit ein unerwünscht tiefes Versenkungsloch 24 sicher vermieden.

## Patentansprüche

1. Befestigungssystem (1) für Bauteile an einen tragenden Untergrund (22, 23), bestehend aus einem Hülsenteil (4) mit einem daran einstückig ausgebildeten Halteteller (11) samt Haltetellerschaft (12), einem mit einschließlich seinem Kopf (6) in eine Durchgangsbohrung (13) des Hülsenteils (4) einführbares, in dem tragenden Untergrund verankerbares Befestigungselement (2) und einem die Durchgangsbohrung (13) nach außen hin verschließenden, eine Einschraub-Werkzeugaufnahme (9) besitzenden Stopfen (3),
**dadurch gekennzeichnet,**
**daß** der Stopfen (3) einstückig mit dem Befestigungselement (2) ausgebildet ist und zur Übertragung des Drehmoments eines Einschraubwerkzeugs auf den Halteteller (11) formschlüssig mit dem Hülsenteil (4) verbunden ist.

2. Befestigungssystem nach Anspruch 1,
**dadurch gekennzeichnet,**
**daß** der Halteteller (11) gewölbt und tellerunterseitig scharfkantig ausgebildet ist.

3. Befestigungssystem nach Anspruch 1 oder 2,
**dadurch gekennzeichnet,**
**daß** der Stopfen (3) eine mehrkantige Außenkontur (5) besitzt, mit der er in eine gleichermaßen mehrkantige Innenkontur (14) des Hülsenteils (4) eingreift.

4. Befestigungssystem nach Anspruch 3,
**dadurch gekennzeichnet,**
**daß** der Stopfen (3) und die ihn aufnehmende Durchgangsbohrung (13) des Hülsenteils (4) von oben nach unten konisch verlaufend ausgebildet sind.

5. Befestigungssystem nach einem der Ansprüche 1 bis 4,
**dadurch gekennzeichnet,**
**daß** der Kopf (6) des Befestigungselementes (1) durch Umspritzen mit Kunststoff mit dem Stopfen (3) versehen ist.

6. Befestigungssystem nach Anspruch 5,
**dadurch gekennzeichnet,**
**daß** der Kopf (6) und ein Längenabschnitt (7) eines Schaftteils (8) des Befestigungselementes (2) von dem Stopfen (3) fest umschlossen sind.

7. Befestigungssystem nach Anspruch 6,
**dadurch gekennzeichnet,**
**daß** der Innendurchmesser der Durchgangsbohrung (13) unterhalb des Sitzes des Stopfens (3) im Haltetellerschaft (12) kleiner ist als der Außendurchmesser des Schaftteils (8) des Befestigungselementes (2).

8. Verfahren zur Anbringung eines Befestigungssystems (1) für Bauteile aus Isoliermaterial an einen tragenden Untergrund (22, 23), bestehend aus einem Hülsenteil (4) mit einem daran einstückig ausgebildeten Halteteller (11) samt Haltetellerschaft (12), einem mit einschließlich seinem Kopf (6) in eine Durchgangsbohrung (13) des Hülsenteils (4) einführbares, in dem tragenden Untergrund verankerbares Befestigungselement (2) und einem die Durchgangsbohrung (13) nach außen hin verschließenden, eine Einschraub-Werkzeugaufnahme (9) besitzenden Stopfen (3),
**dadurch gekennzeichnet,**
**daß** auf das formschlüssig zusammengefügte Befestigungssystem (1) nach dem Einsetzen in eine Bohrung des tragenden Untergrundes (22) ein Tiefenanschlagmittel (26) mit einem in die Einschraub-Werkzeugaufnahme (9) des Stopfens (3) eingreifenden Schraubantrieb (30; 30a, 30b) aufgesetzt wird und mit dem Eintreiben des Befestigungsmittels (2) in die Bohrung durch die Rotation des Haltetellers (11) gleichzeitig das Befestigungssystem (1) im Isoliermaterial (18) bis zu einer von dem Tiefenanschlagmittel (26) genau begrenzten Tiefe versenkt wird.

9. Montagehilfe bei der Anbringung eines Befestigungssystems (1) für Bauteile aus Isoliermaterial an einem tragenden Untergrund (22, 23), bestehend aus einem Hülsenteil (4) mit einem daran einstückig ausgebildeten Halteteller (11) samt Haltetellerschaft (12), einem mit einschließlich seinem Kopf (6) in eine Durchgangsbohrung (13) des Hülsenteils (4) einführbares, in den tragenden Untergrund verankerbares Befestigungselement (2) und einem die Durchgangsbohrung (13) nach außen hin verschließenden, eine Einschraub-Werkzeugaufnahme (9) besitzenden Stopfen (3),
**gekennzeichnet durch**
ein Tiefenanschlagmittel (26), das aus einer unteren Grundplatte (27) mit einem dem Durchmesser des Haltetellers (11) angepaßten Außendurchmesser, einer Distanzhülse (28) und einer oberen Anschlagplatte (29) sowie einem zentrisch **durch** diese Bauteile hindurchgeführten Schraubantrieb (30) besteht, wobei der Schraubantrieb (30) ein Anschlußende (30b) zur Verbindung mit der Einschraub-Werkzeugaufnahme (9) des Stopfens (3) und ein Anschlußende (30a) zur Verbindung mit einem Einschraubwerkzeug aufweist.
